# EUROPEAN PATENT SPECIFICATION

(11) **EP 1 872 623 B1**
(45) Date of publication and mention of the grant of the patent: **17.11.2010**
(21) Application number: 06726711.2
(22) Date of filing: 11.04.2006
(51) Int. Cl.: H05B 6/80, H05B 6/64, A47J 27/62

(54) **COOKING APPLIANCE**
KOCHGERÄT
APPAREIL DE CUISSON

(30) Priority: 12.04.2005 GB 0507392; 13.07.2005 GB 0514415
(43) Date of publication of application: 02.01.2008
(73) Proprietor: The Technology Partnership Plc, Melbourn, Royston, Herts SG8 6EE (GB)
(72) Inventor: STANTON, John, The Techhnology Partnership Plc, Royston, Herts SG8 6EE (GB); BARRINGTON, Sarah, The Techhnology Partnership Plc, Royston, Herts SG8 6EE (GB); ANDERSON, David, The Techhnology Partnership Plc, Royston, Herts SG8 6EE (GB)
(74) Representative: Haley, Stephen
(86) International application number: PCT/GB2006/001310
(87) International publication number: WO 2006/109042

(56) References cited:
- EP-A- 0 339 100
- US-A- 4 503 502
- US-A- 4 649 810
- US-A1- 2004 007 570

## Description

The present invention relates to a cooking appliance which automatically prepares meals.

The convenience food market has grown substantially in recent years in response to a variety of consumer trends. There has been an increase in the number of one-person households and many people are unwilling to make an effort to cook for themselves. An increase in the variety of dietary requirements in most households has also led to a need to quickly cook different meals simultaneously. A decrease in the average amount of free time a person has to enjoy has led to an increased demand for quicker, more convenient meal solutions (the "time-poor", "cash-rich" consumer).

These trends have led to a large and growing market in chilled or frozen ready meals, which a consumer prepares by heating in a microwave or conventional oven. However, there is an increasing emphasis on the need to eat a healthy diet due to high levels of preventable disease and obesity, together with growing concerns over processed foods, preservatives and, in particular, the provenance of ingredients. The food industry has responded to the healthy eating trend by producing "healthier" versions of ready meals (e.g. versions with less fat or salt), however, ready meals remain frozen, processed and contain artificially preserved foods.

Recently, to further cater to the "health conscious" market, the food industry has produced "ready-to-cook" meal kits which may include some fresh ingredients. However, in order to properly prepare a "ready-to-cook" meal kit, a certain amount of ability and effort is required from the user. Furthermore, "ready-to-cook" meal kits are commonly prepared using a users existing appliances, cookware and dishes, thereby collaterally increasing the amount of effort needed to enjoy a meal.

A variety of dedicated domestic "cooking appliances" are known, for example steam cookers, rice cookers, deep fat fryers, bread makers, pressure cookers, microwaves, electric woks, slow cookers and sandwich makers. Howeverthese devices only assist the user with part of the task of preparing a meal and there remains the need to plan, prepare ingredients, control the cooking process, wash-up, etc.

Additionally, in the food service industry, a variety of "cooking appliances" are known for preparing fresh, chilled or frozen food for a large number of people. This is the case in locations such as hospitals, airports and other locations requiring cost-effective mass production of food. Such appliances are required to be operated by a low-skilled workforce. In response to the increased emphasis on healthy eating and more natural ingredients, the food industry is looking for higher, more reliable quality from the food cooked by this low-skilled workforce. Other examples of prior art devices can be found disclosed in US2004/007570 and EP-A-0339100.

There is thus a clear need for freshly cooked food which can be prepared by anyone, without the use of any skill, judgment or labour.

The present invention seeks to solve the above problem by providing a cooking appliance comprising:
a cooking appliance comprising:
   a heating component and a steamer;
   an area for receiving, in use, an ingredient storage device comprising a plurality of ingredient locations, each ingredient location storing an ingredient;
   control means; and
   a cooking region;
   the appliance being arranged to selectively control, in use, in accordance with instructions provided by the control means, the cooking position of the ingredient locations such that the ingredient in a location is only heated when said location coincides with the cooking region, to bring, in use, the ingredients to readiness for consumption at the same time.

An example of the present invention is described below with reference to the accompanying drawings, in which:
Figures 1 to 5 show a cooking appliance according to a first example of the present invention;
Figure 6 and figure 7 show an ingredient storage device according to the first example of the present invention.
Figure 8 shows a cooking appliance according to a second example of the present invention; and
Figure 9 shows an ingredient storage apparatus according to the second example of the present invention.

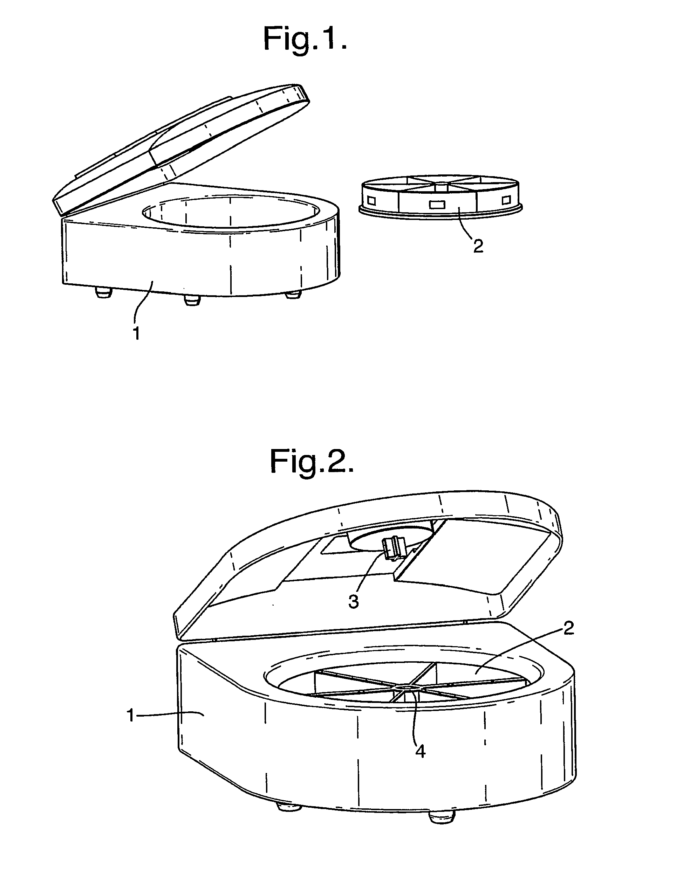

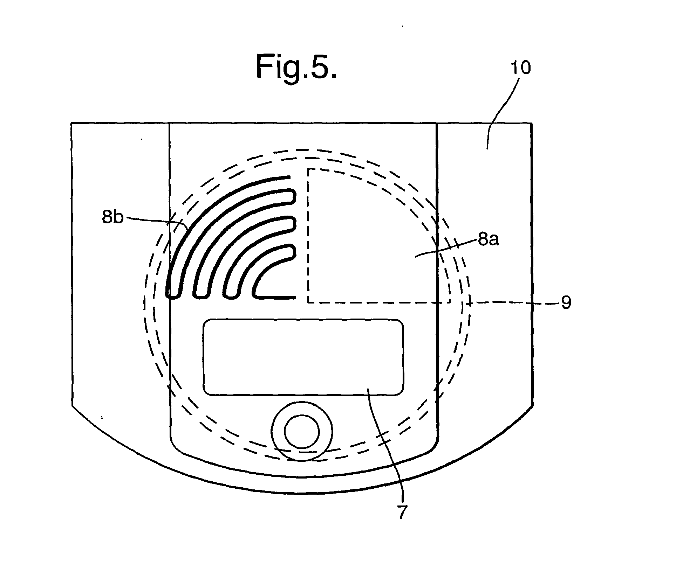

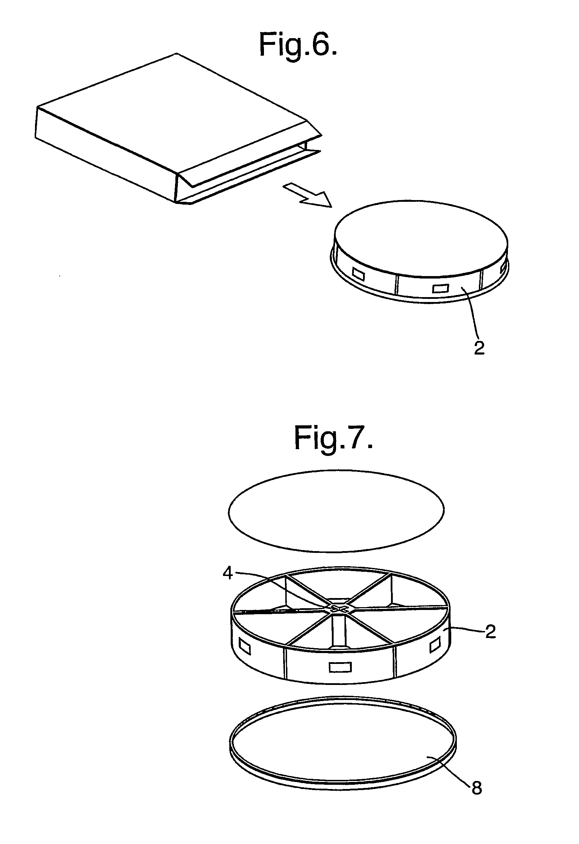

A first example cooking appliance 1 according to the present invention will now be described with reference to figures 1 to 5. In this example a cooking appliance 1 has a heating component comprising, for example, a microwave cooker and a grill, although radiant sources of heat, such as an infra red heater could be used alternatively or additionally. There is a volume 10 (see figure 5) of the appliance 1 for containing microwave components (not shown) such as a magnetron. A steaming function (not shown) is present, for example by means of a water layer heated by a microwave component or standard heating element such as that found in a kettle. The water layer may be part of the appliance 1 or part of an ingredient pouch. The cooking appliance 1 receives an ingredient storage device 2 (see also figure 6 and figure 7). The cooking appliance 1 has associated control circuitry (not shown).

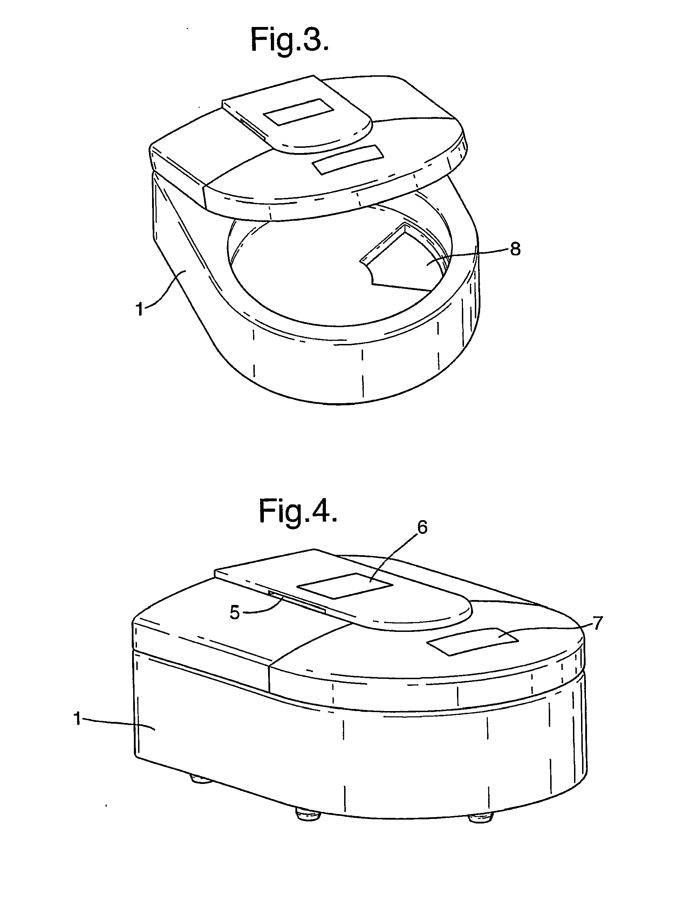

In this example, as shown in figure 3 and figure 5, the cooking appliance 1 comprises a first cooking region 8a defined by a microwave window and a second cooking region 8b defined by a grilling region. However, as will be appreciated, different numbers of cooking regions of different shapes and sizes and for different combinations of heat and microwave sources may be contemplated.

The cooking appliance 1 further comprises a code sensor (not shown in this example). The code sensor is attached to control circuitry (not shown) which regulates the operation of the appliance 1. As will be appreciated, other devices such as network connected computing devices, mobile phones, Radio Frequency Identification tags (RFID) or magnetic tags, may be readily used to provide instructions to the control circuitry.

An ingredient storage device 2 is, in this example, circular with each ingredient storage location being defined as a sector of the circle. The ingredient storage device 2 rotates about a central axis and the cooking appliance 1 comprises an indexing spigot 3, shown as being located in the lid of the appliance 1 in figure 2, which is connected with a turntable 9 which engages with the axis of rotation 4 of the ingredient storage device 2 to drive the rotation of the ingredient storage device 2. In an alternative arrangement, the ingredient storage device 2 may be driven from below rather than by a driving means in the lid. Alternatively the ingredient storage device 2 does not move in use and instead the microwave source or other heating component may move. It should be noted that ingredient storage devices of various shapes (e.g. cubes, strips and squares) may also be possible.

As shown in figure 6, the ingredient storage means 2 may be supplied in a "pizza-style" box, which is easy to handle and store. The "pizza-style" box 11 and the ingredient storage device 2 may all be disposable. The ingredient storage device 2 may either be supplied prefilled with different ingredients (which may be in ingredient pouches) in the different sectors or alternatively, a user may separately purchase ingredient pouches and place the ingredient pouches in different sectors of a ingredient storage device 2 supplied empty of ingredients, in accordance with instructions provided with the pouches and/or the ingredient storage device 2 and/or the cooking appliance 1. A user selected ingredient pouch may have a visual identity code which controls the heating of the ingredients stored therein. Alternatively, the user may program the cooking appliance 1 or the ingredient storage device 2 in which the pouches are placed with a set of instructions about which ingredient is in which sector. There may be one ingredient per sector or several ingredients per sector, depending on the cooking requirements of the different ingredients making up a meal.

The cooking appliance 1 optionally comprises, on its lid in this example, ventilation slots 5, a viewing window 6 and a programming display 7.

The microwave window 8a in the cooking appliance 1 enables microwaves to be directed towards only a part of the volume of the cooking appliance 1 in use. As can be seen most clearly in figure 7, the ingredient storage device 2 is divided up into different locations, which are compartmentalised in this example, and the microwave window 8a corresponds to the area of one compartment when the ingredient storage device 2 is installed in the cooking appliance 1, the grilling region 8b corresponding to the area of a second compartment.

In order to cook a meal, a consumer loads the ingredient storage device 2 containing the ingredients into the cooking appliance 1. Once the ingredient storage device 2 is properly loaded in the cooking appliance 1, the user then closes the lid. The control circuitry (not shown) responds to the closing of the lid and the control means reads the instructions on the ingredient storage device 2 to control the cooking conditions of the ingredients in the different locations of the ingredient storage device 2. These conditions may include, for example, the heating and/or microwaving method used, duration of heating and power used.

Firstly, the control device controls relative movement of the ingredient storage device 2 and the heating component so that the sectors of the ingredient storage device 2 become aligned with the required part of the heating component. The control device then controls any relative movement of the ingredients and parts of the heating component required during cooking. In this example, the ingredient storage device 2 rotates while microwaves cook the food through the microwave window 8a and food in the grill region 8b is grilled by a grill. The control device may control the times at which microwaves are emitted and the intensity of the radiation to ensure that all of the ingredients are ready at the same time. For example, ingredients which do not take long to cook can be microwaved only on alternate passes through the microwave window at a low intensity, while other ingredients which take longer to cook can be microwaved on every pass at a higher intensity. A user may monitor the appliance's operation through a window in the lid of the appliance 1.

When the meal is ready to eat the user is alerted. At the end of the cooking period all the ingredients may be microwaved at low intensity to keep the meal hot.

The ingredient storage device 2 or individual ingredient pouches may be designed to have barrier properties to prevent heat or microwaves from entering the wrong sector of the ingredient storage device 2 when cooking is taking place. The ingredient storage device 2, individual ingredient pouches or other components of the cooking appliance 1 may further have microwave focussing properties to improve the efficiency of the microwave cooking.

As shown in figure 7, the ingredient storage device 2 may comprise a removeable plate portion. When the meal is ready to be eaten and the ingredient storage device 2 is removed from the cooking appliance 1, the plate portion may be removed from the ingredient storage device 2 and used as a conventional dinner plate from which to eat the meal.

The control means operates to cook the meal with no input required from the user. This cooking device is suitable for a meal which does not require any mixing of ingredients, but simply comprises different ingredients that require different cooking times and/or cooking temperatures and/or cooking methods. In this way, freshly cooked meals can be produced from raw ingredients with no skill, recipe planning or sourcing of special ingredients. Portions are automatically controlled. Further there is no waste and the process is energy efficient.

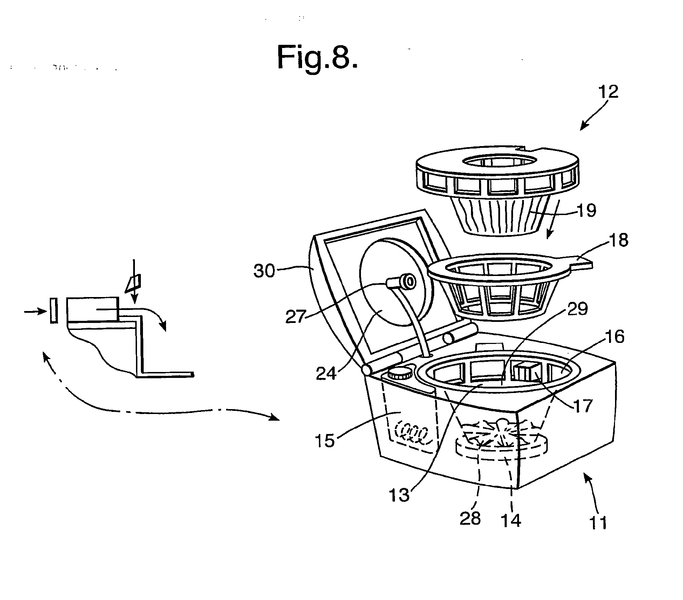

With reference to Figure 8, the features of a second example cooking appliance 11 shall now be described. In this example, the cooking appliance 11 comprises a base which can be made of any easily cleaned material. Within the base is a cooking region 29. At the base of the region, there may be a rotary mixing device 14 which may include radially disposed ribs 28. The circular mixing device 14 may also include a heating element (not shown).

At the uppermost rim of the cooking region, there may be a rotating ring 16, on which may be disposed a code sensor 17.

There is also provided on the uppermost rim, a dispensing device 13. The cooking region 29 may be lined with a removable basket 18. The appliance may also includes a heated water reservoir 15 and a water pipe 27 which dispenses, when required, water from the water reservoir 15 to the cooking region 29. A lid 30 is hingedly connected to the base and may include a window 24 for viewing the contents of the cooking region 29.

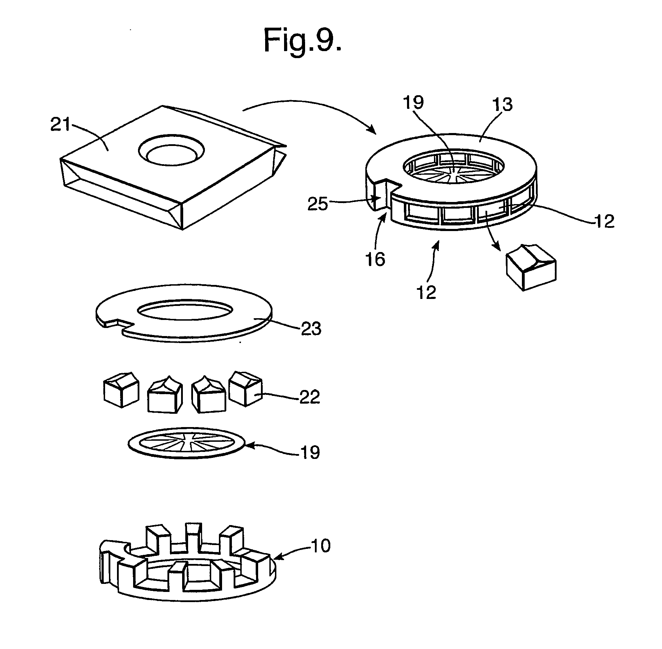

Now, with reference to Figure 9, the features of a second example ingredient storage device 12 will now be described. In this example, the ingredient storage device 12 comprises a circular frame 20 made of any suitably light-weight thermally resistant material. In this example, the circular frame 20 has a plurality of radially and peripherally disposed compartments, each suitable for accepting an ingredient pouch 22. A flexible cooking receptacle 19 may be disposed in the centre of the ingredient storage device 12 and may, when not in use, be folded in order to adopt a more compact form. The flexible cooking receptacle 19 can be made of metal foil or any suitable thermally conductive material.

Furthermore, a perforated steaming receptacle (not shown), suitable for containing ingredients while they are steamed, may be included within the flexible cooking receptacle 19 and may be similar in shape to the cooking receptacle 19.

The ingredient storage means 12 may further comprise an annular lid 2 which prevents the ingredient pouches 22 from being dislodged from their respective compartments. A slot 26 within the frame 20 may be coded with machine-readable instructions 25 which are indicative of how the cooking appliance 11 should dispense and cook the contents of the ingredient pouches 22. The machine-readable instructions 25 may take the form of optically readable marks, indentations, or raised features.

Now, with reference to both Figures 8 and 9, in use, the consumer loads the ingredient storage device 12 into the cooking region 29 of the cooking appliance 1. When loaded in the cooking appliance 11, the ingredient storing device 12 sits on top of a removable basket 18 which supports the flexible cooking receptacle 19. Once the ingredient storage device 12 is properly loaded in the cooking region 19, the user then closes the lid 30. The control circuitry (not shown) responds to the closing of the lid 30 and, in this example, proceeds to read the instructions 25 on the side of the ingredient storage device 12 using the code sensor 17. The instructions 25 may include rate of addition, heating and stirring requirements, as well as the timing for moving on to open the next pouch 22 and instructions for adding water from the reservoir. A user may monitor the appliance's operation through the window 24 in the lid 30.

Then, in accordance with the instructions 25 which the code sensor 17 has read on the ingredient storage device 12, the control circuitry (not shown) operates to control the dispensing, stirring and heating of the ingredients as well as the addition of water to the cooking receptacle 19. In this example, the frame 20 rotates so that pouches 22 move in turn past the dispense position where the pouches 22 are opened and their contents added to the flexible cooking receptacle 19 by means of the dispensing device 13. The dispensing device 13 simultaneously opens a pouch 22 and pushes its contents into the flexible cooking receptacle 19.

Hot or cold water may also be added to the meal at appropriate times from a heated reservoir 15 contained within the appliance and dispensed through the water pipe 27. The perforated steaming receptacle (not shown) is operable to hold the ingredients above the water level created by water which may be introduced between the perforated steaming receptacle (not shown) and the flexible cooking receptacle 9. The heating element (not shown) of the mixing device 14 is operable to boil water so that steam may be introduced through the perforations of the perforated steaming receptacle (not shown). Furthermore, the mixing device 4 may be elevated in order to permit mixing of the ingredients in the perforated steaming receptacle (not shown) using the radially disposed ribs 28.

The rotary mixing device 14 stirs the ingredients by agitation of the flexible cooking receptacle 19. As mentioned above, the rotary mixing device 14 may also comprises a heating element (not shown) which permits the contents of the flexible cooking receptacle 19 to be heated.

## Claims

1. A cooking appliance (1) comprising:
a heating component and a steamer (15);
an area for receiving, in use, an ingredient storage device (2) comprising a plurality of ingredient locations, each ingredient location storing an ingredient;
control means; and
a cooking region (29);
the appliance being arranged to selectively control, in use, in accordance with instructions provided by the control means, the cooking position of the ingredient locations such that the ingredient in a location is only heated when said location coincides with the cooking region, to bring, in use, the ingredients to readiness for consumption at the same time.

2. The cooking appliance (1) according to claim 1, the appliance further being arranged to control, in use, in accordance with instructions provided by the control means, the cooking time of the ingredients stored in different ingredient locations.

3. A cooking appliance (1) according to claim 1 or claim 2, the appliance being further arranged to control, in use, in accordance with instructions provided by the control means, the cooking method of the ingredients stored in different ingredient locations.

4. A cooking appliance (1) according to any preceding claim, wherein the heating component is arranged to vary, in use, the cooking temperature of the ingredients at different stages of cooking, in accordance with the instructions provided by the control means.

5. A cooking appliance (1) according to any preceding claim, wherein the heating component is arranged to vary, in use, the cooking temperature of the ingredients, depending on which ingredient location coincides with the cooking region, in accordance with the instructions provided by the control means.

6. A cooking appliance (1) according to any preceding claim, wherein the heating component and the ingredient storage device are moveable relative to each other.

7. A cooking appliance (1) according to claim 6, wherein the appliance is arranged such that the ingredient storage device (2) is rotatable about a central axis and each location on the ingredient storage device passes, in use, through the cooking region (29) at least once per revolution of the ingredient storage device.

8. A cooking appliance (1) according claim 7, wherein at least one of the locations is heated during only some of its passes through the cooking region (29).

9. A cooking appliance (1) according to any preceding claim, wherein the heating component comprises a heat source.

10. A cooking appliance (1) according to claim 9, wherein the heat source comprises a grill.

11. A cooking appliance (1) according to any preceding claim, wherein the heating component comprises a microwave source.

12. A cooking appliance (1) according to any preceding claim, comprising a plurality of cooking regions;
wherein the heating component comprises a plurality of heat and/or microwave sources associated with the plurality of cooking regions.

13. A cooking appliance (1) according to any preceding claim, wherein the ingredient locations comprise compartments.

14. A cooking appliance (1) according to any preceding claim, wherein the control means comprises at least one of a keypad, a network connected computing device, a mobile telephone or an instruction input device operable to read at least one of an optically detectable code, a series of protuberances and/or grooves, a Radio Frequency Identification tag (RFID) or a magnetic tag.

## Patentansprüche

1. Kochgerät (1), das Folgendes umfasst:
ein Heizbauteil und einen Dampfgarer (15);
eine Fläche, um bei Anwendung eine Zutatenaufbewahrungseinrichtung (2), die mehrere Zutatenorte umfasst, aufzunehmen, wobei jeder Zutatenort eine Zutat aufbewahrt;
Steuerungsmittel; und
einen Kochbereich (29);
wobei das Gerät dafür eingerichtet ist, bei Anwendung, entsprechend den durch die Steuerungsmittel bereitgestellten Anweisungen, die Kochposition der Zutatenorte derart selektiv zu steuern, dass die Zutat in einem Ort nur dann erhitzt wird, wenn der Ort mit dem Kochbereich zusammenfällt, um bei Anwendung die Zutaten zur gleichen Zeit zur Bereitschaft zum Verzehr zu bringen.

2. Kochgerät (1) nach Anspruch 1, wobei das Gerät ferner dafür eingerichtet ist, bei Anwendung, entsprechend den durch die Steuerungsmittel bereitgestellten Anweisungen, die Kochzeit der in unterschiedlichen Zutatenorten aufbewahrten Zutaten zu steuern.

3. Kochgerät (1) nach Anspruch 1 oder Anspruch 2, wobei das Gerät ferner dafür eingerichtet ist, bei Anwendung, entsprechend den durch die Steuerungsmittel bereitgestellten Anweisungen, das Kochverfahren der in unterschiedlichen Zutatenorten aufbewahrten Zutaten zu steuern.

4. Kochgerät (1) nach einem der vorhergehenden Ansprüche, wobei das Heizbauteil dafür eingerichtet ist, bei Anwendung, entsprechend den durch die Steuerungsmittel bereitgestellten Anweisungen, die Kochtemperatur der Zutaten in unterschiedlichen Kochphasen zu variieren.

5. Kochgerät (1) nach einem der vorhergehenden Ansprüche, wobei das Heizbauteil dafür eingerichtet ist, bei Anwendung, entsprechend den durch die Steuerungsmittel bereitgestellten Anweisungen, die Kochtemperatur der Zutaten in Abhängigkeit davon zu variieren, welcher Zutatenort mit dem Kochbereich zusammenfällt.

6. Kochgerät (1) nach einem der vorhergehenden Ansprüche, wobei das Heizbauteil und die Zutatenaufbewahrungseinrichtung im Verhältnis zueinander bewegt werden können.

7. Kochgerät (1) nach Anspruch 6, wobei das Gerät derart eingerichtet ist, dass die Zutatenaufbewahrungseinrichtung (2) um eine Mittelachse gedreht werden kann und jeder Ort auf der Zutatenaufbewahrungseinrichtung bei Anwendung wenigstens einmal pro Umdrehung der Zutatenaufbewahrungseinrichtung durch den Kochbereich (29) hindurchgeht.

8. Kochgerät (1) nach Anspruch 7, wobei wenigstens einer der Orte während nur einiger seiner Durchgänge durch den Kochbereich (29) erhitzt wird.

9. Kochgerät (1) nach einem der vorhergehenden Ansprüche, wobei das Heizbauteil eine Wärmequelle umfasst.

10. Kochgerät (1) nach Anspruch 9, wobei die Wärmequelle einen Grill umfasst.

11. Kochgerät (1) nach einem der vorhergehenden Ansprüche, wobei das Heizbauteil eine Mikrowellenquelle umfasst.

12. Kochgerät (1) nach einem der vorhergehenden Ansprüche, das mehrere Kochbereiche umfasst;
wobei das Heizbauteil mehrere Wärme- und/oder Mikrowellenquellen umfasst, die den mehreren Kochbereichen zugeordnet sind.

13. Kochgerät (1) nach einem der vorhergehenden Ansprüche, wobei die Zutatenorte Abteilungen umfassen.

14. Kochgerät (1) nach einem der vorhergehenden Ansprüche, wobei die Steuerungsmittel wenigstens eine Tastatur, ein Rechnergerät mit Netzverbindung, ein Mobiltelefon oder ein Anweisungseingabegerät, das funktionsfähig ist, um wenigstens einen optisch erkennbaren Code, eine Reihe von Vorsprüngen und/oder Rillen, ein Hochfrequenz-Identifizierungsetikett (Radio Frequency Identification Tag - RFID) oder ein Magnetetikett zu lesen, umfassen.

## Revendications

1. Appareil de cuisson (1) comprenant :
un composant chauffant et une centrale à vapeur (15) ;
une zone destinée à recevoir, durant l'utilisation, un dispositif de stockage d'ingrédients (2) comprenant une pluralité d'emplacements pour ingrédients, chaque emplacement pour ingrédient stockant un ingrédient ;
un moyen de commande ; et
une zone de cuisson (29) ;
l'appareil étant agencé pour commander sélectivement, durant l'utilisation, conformément à des instructions délivrées par le moyen de commande, la position de cuisson des emplacements pour ingrédients de telle sorte que l'ingrédient se trouvant dans un emplacement soit chauffé uniquement quand ledit emplacement coïncide avec la zone de cuisson, afin d'amener, durant l'utilisation, les ingrédients simultanément à un état où ils peuvent être consommés.

2. Appareil de cuisson (1) selon la revendication 1, l'appareil étant en outre agencé pour commander, durant l'utilisation, conformément aux instructions délivrées par le moyen de commande, la durée de cuisson des ingrédients stockés dans des emplacements pour ingrédients différents.

3. Appareil de cuisson (1) selon la revendication 1 ou la revendication 2, l'appareil étant en outre agencé pour commander, durant l'utilisation, conformément aux instructions délivrées par le moyen de commande, le mode de cuisson des ingrédients stockés dans des emplacements pour ingrédients différents.

4. Appareil de cuisson (1) selon l'une quelconque des revendications précédentes, dans lequel le composant chauffant est agencé pour faire varier, durant l'utilisation, la température de cuisson des ingrédients à différents stades de la cuisson, conformément aux instructions délivrées par le moyen de commande.

5. Appareil de cuisson (1) selon l'une quelconque des revendications précédentes, dans lequel le composant chauffant est agencé pour faire varier, durant l'utilisation, la température de cuisson des ingrédients en fonction de l'emplacement pour ingrédient qui coïncide avec la zone de cuisson, conformément aux instructions délivrées par le moyen de commande.

6. Appareil de cuisson (1) selon l'une quelconque des revendications précédentes, dans lequel le composant chauffant et le dispositif de stockage d'ingrédients sont mobiles l'un par rapport à l'autre.

7. Appareil de cuisson (1) selon la revendication 6, dans lequel l'appareil est agencé de telle sorte que le dispositif de stockage d'ingrédients (2) puisse tourner autour d'un axe central et que chaque emplacement sur le dispositif de stockage d'ingrédients passe, durant l'utilisation, par la zone de cuisson (29) au moins une fois par révolution du dispositif de stockage d'ingrédients.

8. Appareil de cuisson (1) selon la revendication 7, dans lequel au moins l'un des emplacements est chauffé durant uniquement certains de ses passages par la zone de cuisson (29).

9. Appareil de cuisson (1) selon l'une quelconque des revendications précédentes, dans lequel le composant chauffant comprend une source de chaleur.

10. Appareil de cuisson (1) selon la revendication 9, dans lequel la source de chaleur comprend un grill.

11. Appareil de cuisson (1) selon l'une quelconque des revendications précédentes, dans lequel le composant chauffant comprend une source micro-ondes.

12. Appareil de cuisson (1) selon l'une quelconque des revendications précédentes, comprenant une pluralité de zones de cuisson ;
Dans lequel le composant chauffant comprend une pluralité de sources de chaleur et/ou micro-ondes associées à la pluralité de zones de cuisson.

13. Appareil de cuisson (1) selon l'une quelconque des revendications précédentes, dans lequel les emplacements pour ingrédients comprennent des compartiments.

14. Appareil de cuisson (1) selon l'une quelconque des revendications précédentes, dans lequel le moyen de commande comprend au moins l'un d'un pavé numérique, d'un dispositif informatique connecté à un réseau, d'un téléphone portable ou d'un dispositif de saisie d'instructions exploitable pour lire au moins l'un d'un code à détection optique, d'une série de protubérances et/ou de sillons, d'une étiquette d'Identification par fréquence radioélectrique (RFID) ou d'une étiquette magnétique.
